# EUROPEAN PATENT APPLICATION

(11) **EP 4 369 855 A2**
(43) Date of publication of application: **15.05.2024**
(21) Application number: 23209076.1
(22) Date of filing: 10.11.2023
(51) Int. Cl.: H04W 84/12, H04W 28/02, H04W 52/24

(54) **SYSTEM FOR AND METHOD OF ACCESS PROTOCOL**

(30) Priority: 12.11.2022 IN 202221064892; 26.04.2023 US 202318307419
(71) Applicant: Avago Technologies International Sales Pte. Limited, Singapore 768923 (SG)
(72) Inventor: VERMA, Sindhu, Bangalore (IN); ADHIKARI, Shubhodeep, Bangalore (IN); FISCHER, Matthew J., Mountain View (US); ERCEG, Vinko, Carlsbad (US); BHUKANIA, Bijoy, Bangalore (IN); GUMMADI, Srikanth, Bangalore (IN)
(74) Representative: Dilg, Haeusler, Schindelmann Patentanwaltsgesellschaft mbH

(57) **Abstract**

A device can detect an energy level of an OBSS communication. The device can determine an identity associated with the OBSS communication. The device can determine a threshold associated with the identity of the OBSS communication. The device can compare the energy level of the OBSS communication to the threshold. The device can transmit a message simultaneous to the OBSS communication on a same link as the OBSS communication. The message can be transmitted based on the comparison of the threshold to the energy level of the OBSS communication.

## Description

### Cross-Reference to Related Application

The present application claims priority to Indian Provisional Patent Application No. 2022-21064892, filed on 12 November 2022 and U.S. Patent Application No. 18/307,419 filed on 26 April 2023, the entire contents of which are incorporated by reference in their entirety.

### Field of the Disclosure

This disclosure generally relates to systems for and methods of communication between a station (STA) and access point (AP) or between other communication devices.

### Background of the Disclosure

In the last few decades, the market for wireless communications devices has grown by orders of magnitude, fueled by the use of portable devices, and increased connectivity and data transfer between all manners of devices. Digital switching techniques have facilitated the large scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.1 lx, Bluetooth, global system for mobile communications (GSM), code division multiple access (CDMA). As higher data throughput, density of networks, and other changes develop, newer standards are constantly being developed for adoption, such as a progression from IEEE 802.11n to IEEE 802.11ac, ax, or be. Network density can lead to a reduction of transmit opportunities based on interference between or within base station sets (BSS). The loss of TXOPs can contribute to increased latency or decreased throughput of network communications.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGs. 1B and 1C are block diagrams depicting computing devices useful in connection with the methods and systems described herein, according to some embodiments.
FIG. 2 is a block diagram depicting a network including access points (APs) and stations (STAs), according to some embodiments.
FIG. 3 is look up table, according to some embodiments.
FIG. 4 is a flow diagram illustrating an example method of network communication, according to some embodiments.
FIG. 5 is a BSS network including a plurality of AP and non-AP devices, according to some embodiments
FIG. 6 is an example method 600 of network communication, according to some embodiments.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE P802.11n^{™}; and IEEE P802.11ac^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of access protocols and methods and devices using access protocols.

To increase a throughput or decrease a latency, a network can simultaneously transmit multiple messages over a spatial dimensions. For example, different devices can simultaneously communicate over a same link (e.g., frequency) at a same time, wherein the mutual interference of the transmissions is sufficiently low. For example, a transmit power can be adjusted to avoid interference. A network can include arbitration or other methods to determine a transmitter within a subnetwork, such as a basic service set (BSS) of devices including client devices (e.g., STAs) which can communicate via an access point (e.g., an AP or mobile AP). However, some networks can include overlapping BSS (OBSS). For example, some networks can include overlapping BSS of a same extended service set (e.g., sharing an SSID) or of different extended service sets. Some network devices of a BSS can cause interference with one or more OBSS. Wireless devices can conduct a clear channel assessment (CCA) prior to a transmission to avoid interfering with other devices. For example, a wireless device can employ preamble detection (PD) to detect a message of an OBSS (OBSS-PD). The wireless device can further determine a power or energy level of the message, the preamble, or a portion thereof. For example, the wireless device can employ OBSS-PD to determine a power level of another network device.

The wireless device can determine whether a transmit opportunity (TXOP) exists based on the power level of the detected preamble. For example, the wireless device can include or receive a threshold (e.g., -82 dBm). The wireless device can compare a power level of a OBSS-PD with the threshold. The wireless device can transmit simultaneously with another device having a OBSS-PD power level below the threshold. Such overlapping communication can be referred to as spatial reuse. A low power OBSS-PD can be indicative of a distant device, or a device otherwise having a high pathloss with the wireless device. For example, an obstacle, such as a wall can intermediate the devices. Thus, the use of the threshold can increase a number of TXOPs. However, the use of the threshold can increase contention between network devices. For example, although the transmitting station can be distant (or otherwise associated with a high pathless), one or more intended recipients of the message can be proximal to the wireless device, and thus spatial reuse can interfere with a receiving device.

To avoid contention, the wireless device can determine an average, maximum, or other aggregation of a power level for various devices of a BSS of a network. For example, various 802.11 BSS can be identified based on a 48 bit BSSID, or a 6 bit color. The wireless device can establish an average, maximum, or other power level of another BSS (e.g., an OBSS), and transmit based on the average, maximum, or other power level. Thus, the wireless device can avoid contention in the case of an OBSS including some devices having a low pathloss, and other devices having a high pathloss. However in such an approach, the wireless device can detect a sub-optimal number of TXOPs. For example, a communication of two distant devices on an OBSS can block a potential TXOP, based on one or more devices of the OBSS having a low pathloss to the wireless device, regardless of whether the low pathloss devices are involved in the communication. The wireless device can vary a power level in conjunction with spatial reuse based on a BSS, such as by reducing a transmit power when employing spatial reuse according to the average, maximum, or other power associated with the OBSS. The wireless device can avoid contention by adjusting a power level of a transmission. For example, the wireless device can reduce an output level to avoid interfering with an OBSS while employing spatial reuse. However, adjusting a power level based on an average BSS power level, or a power level of a transmitter may not be sufficient or necessary to avoid interference at every receiver.

The wireless device can thus detect a power level of each transmitter, each receiver, or each transmitter receiver pair, and employ spatial reuse based on said power level. Such an approach can supplant or supplement a BSS based technique such as a color based scheme. For example, the wireless device can determine a power level of a transmitter or receiver. The wireless device can infer a pathloss between the device based on the transmitter or receiver. For example, the transmitter can detect a power level and compare the power level to a transmit power of the transmitting device. According to some embodiments, the wireless device can receive a pathloss from a device of an OBSS (e.g., via a master AP). The pathloss can be determined by a unit detecting a packet (e.g., a receiving unit can transmit an indication of detected power to a sending unit, via an AP or master AP). According to some embodiments, the pathloss can be determined by a unit sending a packet, based on a power level received from another wireless device (e.g., pathloss can be approximated as bidirectional).

Some embodiments relate to a device. The device can detect an energy level of an OBSS communication. The device can determine an identity associated with the OBSS communication. The device can determine a threshold associated with the identity of the OBSS communication. The device can compare the energy level of the OBSS communication to the threshold. The device can transmit a message simultaneous to the OBSS communication on a same link as the OBSS communication, based on the comparison of the threshold to the energy level of the OBSS communication.

In some embodiments, the identity associated with the OBSS communication is a color for a BSS. In some embodiments, the device is an access point (AP) further configured to schedule a TXOP for an additional network node, separate from the AP, based on the energy level, and convey the TXOP to the additional network node. In some embodiments, the identity associated with the OBSS communication is an identity of an addressee of the OBSS communication. In some embodiments, the identity associated with the OBSS communication is an identify of each of a transmitter-receiver pair performing the OBSS communication. In some embodiments, the device is configured to operate as a station (STA). In some embodiments, the device is configured to operate as an access point. In some embodiments, the device is configured to maintain a lookup table (LUT) for one or more stations of a same BSS.

In some embodiments, the device maintains an additional LUT for an additional access point. The device can detect a failed transmission to or from at least one of the access point or the additional access point. The device can update the LUT or the additional LUT based on the detection of the failed transmission. In some embodiments, the device includes a wired connection to convey a portion of the LUT between the device and the additional access point. In some embodiments, the device can adjust a transmit power for the transmitted message based on the energy level of the OBSS communication.

Some embodiments relate to a device. The device can include a first access point (AP) designated as a primary AP. The first AP can receive a detected power level from a second AP. The first AP can store the detected power level in a lookup table (LUT). The first AP can determine a threshold for simultaneous transmission with one or more identified network nodes. The first AP can transmit the LUT or the threshold to a station (STA) device in network communication with the first AP. The second AP can include a radio configured to wirelessly communicate with a plurality of STA devices simultaneously.

In some embodiments, the first AP and the second AP can transmit at a power level based on the threshold. In some embodiments, the device includes a wired connection between the first AP and the second AP. Power level information can be conveyed over the wired connection. In some embodiments, the one or more identified network nodes are identified based on a color of a BSS of the identified network nodes. In some embodiments, the one or more identified network nodes are identified based on an identifier of at least one of a transmitter or receiver of a message. In some embodiments, the first AP can store a pathloss between each device of a BSS of the first AP and a device of a BSS of the second AP in the LUT.

Some embodiments relate to a method. The method can include detecting a first energy level of an OBSS communication. The method can include determining an identity associated with the OBSS communication. The method can include determining a threshold associated with the identity of the OBSS communication. The method can include comparing the first energy level of the OBSS communication to the threshold. The method can include transmitting a message simultaneous to the OBSS communication on a same link as the OBSS communication, based on the comparison of the threshold to the first energy level of the OBSS communication.

In some embodiment, the method includes determining a pathloss between devices, wherein the threshold is further based on the pathloss. In some embodiments, the method includes receiving data comprising a pathloss or a second energy level from an STA of a first network to an AP of the first network. The method can include conveying the pathloss from the first AP to a second AP of a second network. The method can include detecting a first message transmitted on the first network. The method can include transmitting a second message on the second network simultaneously with the first message, based on the data.

### A. Computing and Network Environment

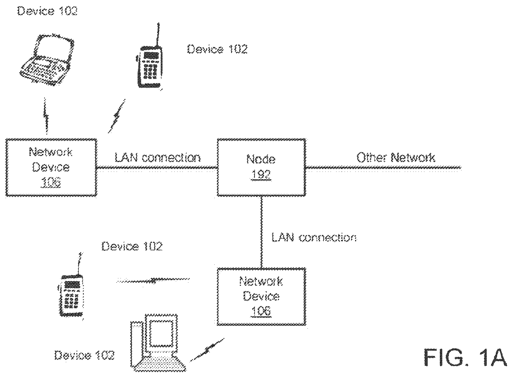

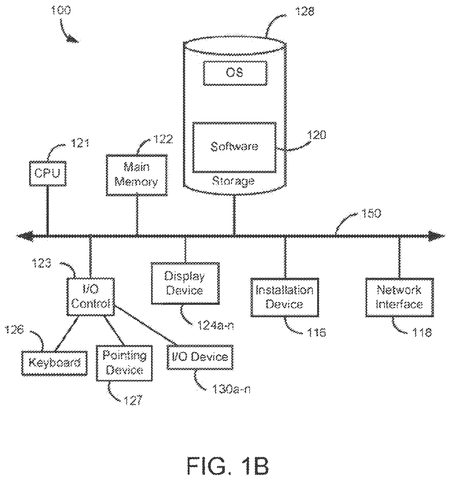

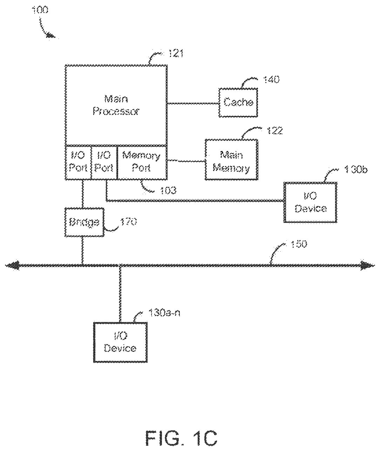

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.1 1a, IEEE 802.11b, IEEE 802.11g, IEEE 802.11n, IEEE 802.11ac, IEEE 802.1 lad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Station and AP Communication

Disclosed herein are systems and a methods of spatial reuse of network spectrum. For example, multiple BSS instances can form an OBSS. A device of the first BSS can detect a transmission of various devices on the second BSS, third BSS, fourth BSS, and so on. The device of the first BSS can determine an average, maximum, or other power level of each BSS of the OBSS based on a preamble detection/packet detection of the OBSS transmitters (OBSS-PD). The device of the first BSS can establish a threshold or pathloss with respect to various transmitters, receivers, or transmitter-receiver pairs based on the power level for each of the OBSS or devices thereof. The device of the first BSS can employ spatial reuse, adjust a transmit power level, or delay a transmission based on the threshold or pathloss.

A STA is any device for communicating in a communication system and includes but is not limited to a fixed, portable, or mobile laptop, desktop personal computer, personal digital assistant, access point, work station, wearable device, smart phone, or Wi-Fi phone. As used herein an "access point" (AP) refers to a device for communicatively coupling one or more "non-AP" devices (e.g., a client device) to a network. More specifically, an AP may enable non-AP devices to connect and communicate with a network. In some embodiments an AP may be a "wireless access point" (WAP) configured to enable wireless communication between non-AP devices. An AP includes but is not limited to a mobile, portable, or fixed hot spot, router, bridge, or other communication device.

An overlapping basic service set (OBSS) communication may refer to a communication transmitted or received by a device of a first basic service set detected by a device of a second basic service set, in some embodiments. For example, the OBSS communication can be detected responsive to a clear channel assessment to determine if a wireless channel is available for transmission. An energy level can refer to an average, total, or instantaneous power of a message, and may be referred to as a power level in some embodiments. A simultaneous transmission of a message can refer to a transmission of a first message temporally overlapping with a second message, in part or in whole according to one or more embodiments. A color can refer to a numeric identification of a basic service set (BSS), in some embodiments. For example, a color can include a 6-bit value for a BSS. An identity can refer to a symbolic representation for a system, device, or portion thereof in some embodiments. For example, an identifier can identify a version, instance, or capability of a radio, a device, a BSS, or another network. A lookup table (LUT) can refer to an assemblage of information for various devices or messages in some embodiments. For example, a LUT can include an energy level, sender, receiver, timeslot, pathloss, relationship therebetween, or the like. A TXOP can refer to a transmit opportunity in some embodiments. For example, a TXOP can refer to session of channel occupancy with respect to one or more transmitters in some embodiments.

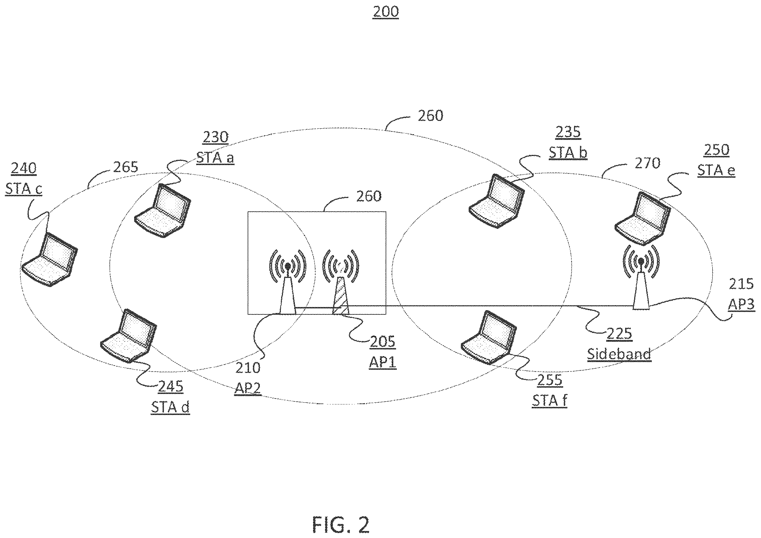

With reference to FIG. 2, a wireless communication network or system 200 includes APs AP1 205, AP2 210, and AP3 215. The APs can include or interface with one or more control links 225, which can include a wired or wireless sideband connection therebetween. For example, the control link 225 can be a channel of a 2.4 GHz link. The system 200 includes STAs STA a 230, STA b 235, STA c 240, STA d 245, STA e 250, and STA f 255. The STAs can be disposed between various BSS according to a connection to an AP thereof. Particularly, the first BSS 260 includes AP1 205, STA a 230, and STA b 235. The second BSS 265 includes AP2 210, STA c 240, and STA d 245. The third BSS 270 includes AP3 215, STA e 250, and STA f 255. Such a system 200 is not limiting; any number of STAs and APs, or BSS can be included in a network or system 200.

An AP can provide services to a STA, such as serving as a connection point to another network. Each STA and AP can include a wireless transceiver and various modules for communicating via connections. The modules can be software (e.g., firmware) and/or hardware components. In some embodiments, each depicted STA and AP includes an IEEE 802.11 conformant media access control (MAC) circuit and physical layer (PHY) interface to the wireless medium and can be part of a larger device or system. In some embodiments, each of STAs and APs operate according to other standards than IEEE 802.11 or variants thereof. A connection for wireless communication can be established between at least one of the STAs and APs. For example, STA a 230 has a connection to AP1 205. Each STA includes circuitry (e.g., a first processor 121); each AP includes circuitry (e.g., a second processor 121). Operations performed by the STAs and APs or other devices herein can be performed by a circuit thereof.

Certain operations of the system 200 will now be discussed with regard to AP1 205 and the first BSS 260. Such a description is merely for the brevity and clarity of this disclosure, and is not intended to be limiting. According to some embodiments, any AP such as AP2 210 or AP 3 215 can perform similar operations. According to some embodiments, various STA devices can perform similar operations. According to some embodiments, a system can interoperate with a first portion of devices configured to reuse spatial spectrum according to the systems and methods described herein, and a second portion of devices which are not configured to reuse spatial spectrum according to the systems and methods described herein.

AP1 205 can receive an OBSS-PD from an AP or STA of the second BSS 265 or the third BSS 270. AP1 205 can receive information from a header of a message associated with the OBSS-PD. In some embodiments, the received information can include a color, BSSID, or other indicia of a BSS of the message. In some embodiments, the received information can include a source address, destination address, or another address within the respective BSS. For example, AP1 205 can determine a MAC address of a source of the message and a MAC address of an immediate recipient, as least one of which is in the respective BSS. AP1 can determine a power level (which may also be referred to as an energy level) of the OBSS-PD. The various radios can detect a duration of an OBSS communication, such as according to a PHY preamble, a MAC header, packet type, or another identifier of a packet (e.g., inter-packet duration information). The various radios can detect a duration of transmit frames (and can transmit frames having a duration less than the detected duration). For example, the device employing spatial reuse can complete the transmission without extending a time of use of the network.

The power level or modulation coding scheme (MCS) index can be indicative of a likelihood that a transmission on the same spatial spectrum can interfere with the detected transmission. For example, AP2 210 can be co-located with AP1 205 (e.g., in a same device 275) such that AP1 205 can receive a relatively high power level for an OBSS-PD from a transmission from AP1 205. AP3 215 can be distal to AP1 205, such that AP1 205 can receive a relatively low power level for an OBSS-PD from a transmission from AP3 215. However, the power levels associated with transmissions from AP2 210 and AP3 215 may not be indicative of a potential for interference from AP1 205. For example, a transmission from AP2 can be directed to STA c 240, which can be located a distance from AP1, having an obstacle therebetween, whereas a message from AP3 215 can be directed to STA f 255 which can be located proximal to AP1 with no obstacle therebetween. Thus, a detected power level which may be indicative of a pathloss between a device and a transmitter may not be indicative of a pathloss of a sender. Rather than rely on transmitter power, a device can determine a power for an OBSS. For example, AP1 205 can determine a power limit threshold for each of the second BSS 265 and the third BSS 270 (e.g., according to a color thereof), or for each transmit/receive pair of the second BSS 265 and the third BSS 270.

AP1 205 can determine a power level for a BSS, device, or transmitter-receiver pair based on an average (e.g., mean) observed OBSS-PD power level, a maximum observed OBSS-PD power level, or another value. For example the AP1 205 can store a percentile power level, a weighted power level based on recency, or the like. AP1 205 can determine a transmit power level or identify a transmit opportunity (TXOP) based on the detected OBSS-PD power level. For example, AP1 205 can determine a first threshold for an open channel The first threshold for the open channel can be indicative of no detectable OBSS-PD, no readable content of a OBSS-PD, or a power level of an OBSS-PD below a defined threshold (e.g., -90 dBm or -82 dBm). The AP1 205 can determine a second threshold for a maximum OBSS-PD power level indicative of a TXOP. Responsive to an OBSS-PD power level in excess of the second threshold, AP 1 can delay any pending transmissions.

Responsive to power levels greater than the first threshold and less than the second threshold, AP1 205 can adjust a transmission power. For example, AP1 can decrease a transmission power to avoid contention/interference with a device of an OBSS. The power adjustment can be linearly adjusted between the first threshold and the second threshold, or responsive to a comparison to one or more intermediate thresholds. AP1 can convey the transmission power levels or spatial reuse pairs to various wireless devices of the first BSS 260. For example, AP1 205 can convey a power limit threshold for each BSS color, each transmitter, each receiver, or each transmitter-receiver pair. AP1 205 can convey a list of BSS colors, transmitter, receiver, or transmitter-receiver pairs which are compatible or incompatible with spatial reuse, relative to a predefined threshold (e.g., -82dBm). Upon receipt of the power limits or the list, the various wireless devices can determine whether spatial reuse is authorized for a received communication (e.g., based on an identity of a sender or receiver, such as a unique identifier or a BSS color based on a MAC header). The various wireless devices may receive an indication of a transmit power limit, and determine an output power level based on the power limit.

In some embodiments, the spatial reuse can be limited to a like communication. For example, spatial reuse can be performed between two or more uplink transmissions. Spatial reuse can be performed between two or more downlink transmissions. In some embodiments, the OBSS-PD power level can be determined based on a receiver of a transmission for downlink transmission, and an OBSS-PD power level can be determined based on a transmitter of a transmission for uplink transmission. For example, STAs can determine an OBSS-PD power level for various APs such that multiple STAs can perform spatial reuse based on a detected power level. For example, STA a 230 can determine a power level of AP3 215, compare the power level to a threshold and determine that spatial reuse can be performed when another client such as STA e 250 or STA f 255 is transmitting to AP3 215 because the OBSS-PD power level of AP3 received by STA a 230 may be predictive of an interference caused at AP3 215 by STA a 230. Likewise, AP1 205 can transmit downlink messages employing spatial reuse with AP3 215 based on a power level of a transmission from a STA of the third BSS 270.

Various power levels can be shared between BSS according to inter-AP communication. A master AP can be designated to manage communication or store a master lookup table (LUT) comprising power levels of individual messages. The master AP can be determined by a manual entry of a user, a configuration file, or an arbitration between various OBSS. For example, any number of APs can be maintained in an appliance 106 and the various APs can include local sideband communication (e.g., RS-232, Ethernet, PCIe, AXI, or the like). The sideband communication can depend on a colocation or non-colocation of the link. For example, two AP on a same chip can employ an AXI link; two AP of separate appliances can employ Ethernet sideband communication. The OBSS can each be mutually overlapping with each other, or can form OBSS chains between BSS (e.g., can include a mesh network wherein two or more OBSS may not overlap each other). The master AP can distribute copies of the LUT to STA of a same BSS, and APs of other BSS, which may, in turn, distribute the LUT to STA of the respective BSSs. The distribution of the LUT can be in whole or in part. For example, a limited LUT can be distributed according to a wireless device type.

The Master AP or other APs can receive power measurements from various clients thereof. The Master AP can receive transmit power from the various other APs, such that a pathloss matrix can be determined between each client. For example, a first AP transmitting at 25mw and a second AP transmitting at 200mw can cause similar interference at a client, but the pathloss can vary. Each device can receive or determine a signal to interference and noise ratio (SINR) and determine a maximum power output based on the SINR for one or more MCS. The master AP can determine a maximum transmit power to various other AP, or non-AP. The master AP can determine a maximum number of spatial reuse transmissions, and indicate the maximum number to other network nodes, such as by indicating a busy bit when an OBSS node is employing spatial reuse, or maintaining a counter of OBSS nodes employing spatial reuse and providing a broadcast message when the number is exceeded. The master AP can be defined on a per-appliance, per network, or per-band basis. For example, a master for a 6 GHz band may be different than a master for a 5 GHz band. Indeed, the various techniques and systems of the present disclosure can operate independently between various bands such as a 2.4, 5, or 6 GHz bands of a wireless network.

Subsequent to determining a threshold, transmit power level, compatible BSS, receiver, transmitter, or transmitter-receiver pair, a detecting device can update the threshold, transmit power level, or compatible BSS, receiver, transmitter, or transmitter-receiver pair. For example, the average, maximum, or other OBSS-PD power level can be adjusted based on a rolling average, or stale data can otherwise be removed from one or more LUTs. Thus, changes in network parameters (e.g., due to changes in environmental conditions, location, or network settings) can be updated based on any changes thereto. The updates can be based on the OBSS-PD power level, or a success rate of a transmission. For example, a high level of transmission failures can be indicative of an overly aggressive spatial reuse, which can be adjusted by a reduction of TXOPs or a reduction of transmit power. A low level of transmission failures can be indicative of an overly conservative spatial reuse, which can be adjusted by an increase of TXOPs or an increase of transmit power. For example, a master AP, another AP, or non-AP can increment a counter (e.g., by 1) in response to a successful spatial reuse transmission, and decrement a counter (e.g., by a value greater than 1) in response to an unsuccessful spatial reuse transmission, and base TXOPs or transmit power on the state of the counter.

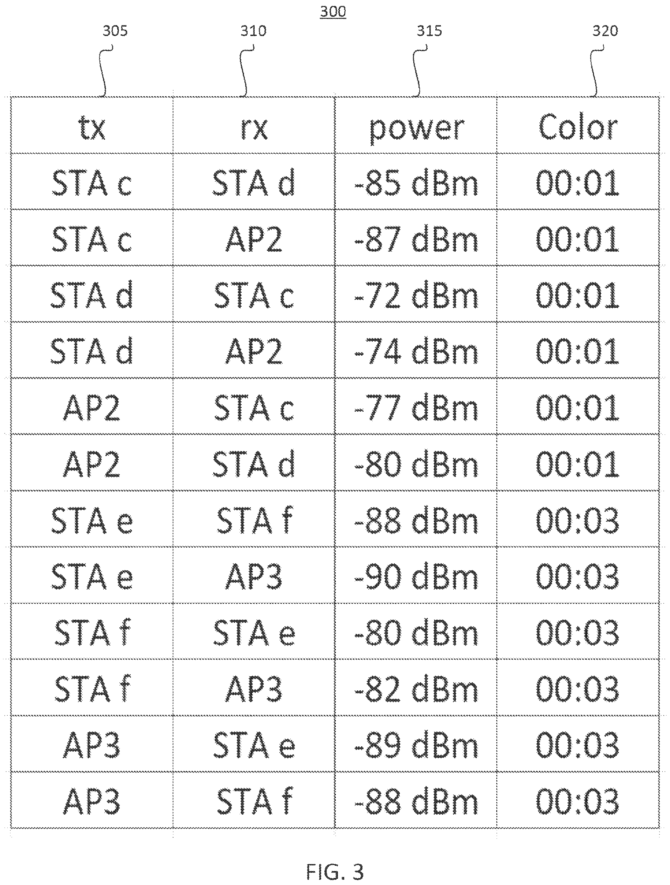

FIG. 3 is a LUT 300 which can be stored by one or more network nodes, according to some embodiments. The LUT 300 information can be gathered at a same location as a storage thereof, or received from a co-located or non co-located node. The network node can determine various information from the LUT 300. For example, the network node can determine an average, maximum, or other power level per BSS (e.g., based on the color 320 thereof, the BSSID thereof, or the like). The LUT 300 can include a transmitter list 305 or a receiver list 310. According to some embodiments, the transmitter list or the receiver list can be omitted. For example, an entry can only indicate a color 320, only indicate a transmitter, or only indicate a receiver. An indication of an OBSS-PD power level 315 can be stored in the LUT 300. For example, the OBSS-PD power level 315 can be stored on a transmission basis, or a rolling average can be maintained. The depicted information is not intended to be limiting. For example, an error rate other indication of link health, a determined pathloss, or other information can be stored in the LUT 300.

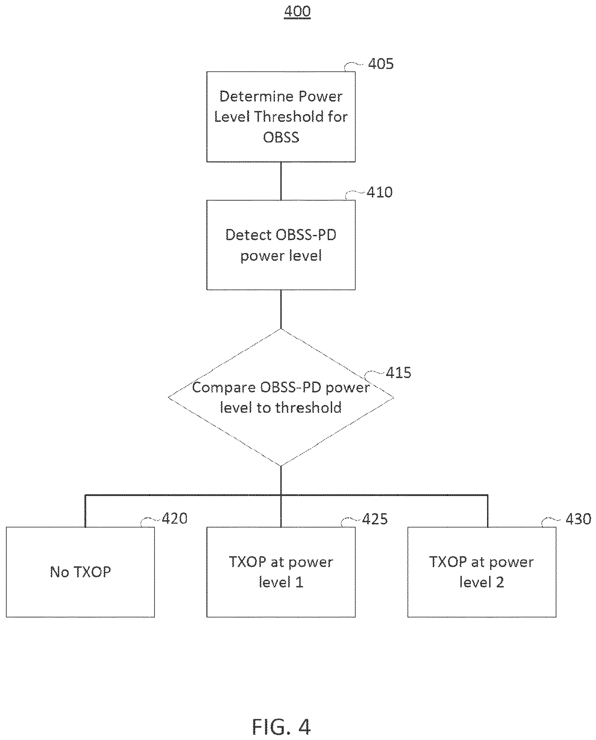

FIG. 4 is an example method 400 of network communication, according to some embodiments. In brief summary, at operation 405, a network node determines a power level for an OBSS node. At operation 410, the network node detects an OBSS-PD power level. At operation 415, the network node compares the OBSS-PD power level to a threshold. At operation 420, the network node determines that no TXOP exists. At operation 425, the network node determined a TXOP exists at a first power level. At operation 430, the network node determined a TXOP exists at a second power level. The depicted method is not intended to be limiting. Operations can be added, omitted, or substituted. For example, the network node can update a power level threshold or either of the first or second power level responsive to an error rate, or a detected power level of another node.

Referring again to operation 405, a power level threshold can be determined for a detected OBSS-PD power level. For example, the power level threshold can be a predefined value, or can be determined according to a detected power level of other network devices. The power level threshold can be determined at the network node, determined by an AP of the BSS of the network, or determined by a master AP associated therewith. The power level threshold can be determined according to a power level or pathloss associated with a transmitting or receiving device of the detected OBSS-PD. For example, the power level threshold can be determined based on a transmit power of the network node in one or more MCS. The power level threshold can be determined based on a SNIR margin of the network node. For example, the SNIR margin can be determined based on the MCS, or can be manually entered according to a configuration file or other user preference. For example, an SNIR margin can be adjusted upward to reduce an error rate, or downward to reduce a latency of at least some network messages.

Referring to operation 410, the network node detects an OBSS-PD power level of a network node. The network node can determine an identity of a transmitter, receiver, or BSS of the OBSS-PD, according to a MAC header. The network node can store the data locally in a LUT 300, or convey the information to another network node, such as an AP, a master AP, or a non-AP. At operation 415, the network node can compare the OBSS-PD power level to one or more thresholds, functions, or scales. Based on the comparison, the network node can proceed to operation 420, operation 425, or operation 430.

Referring to operation 420, the network node can determine that the OBSS-PD power level is indicative of a lack of a TXOP. The determination can be made based on the OBSS-PD power level, an MCS, a history of previous message completion of failure, or a number of other devices of a network employing spatial reuse. The network node can communicate the lack of the TXOP to another network node, or store the information locally. The network node can continue to check the status of the channel and transmit at a later time. At operation 425, the network node can determine that a TXOP exists at a first power level, such as a minimum power level. For example, the network node can adjust a power level downward based on other BSS or nodes. The network node can transmit the message, determine a success or failure of the transmission, and store or communicate the result. At operation 430, the network node can determine that a TXOP exists at a second power level, such as a same power level as is indicated for a CCA (e.g., a maximum power level). The network node can transmit the message, determine a success or failure of the transmission, and store or communicate the information.

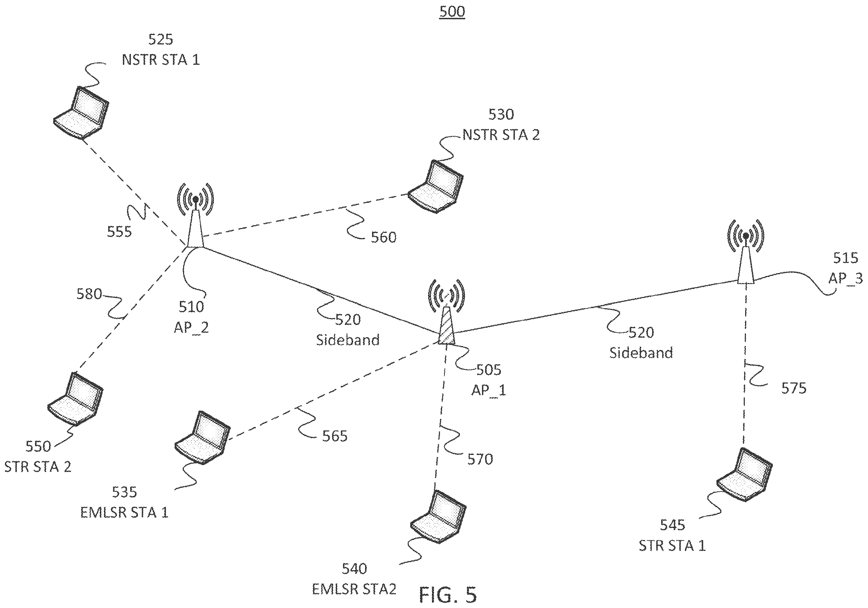

According to various embodiments, the systems and methods described herein can be employed for spatial re-use between OBSS, or within a BSS. For example, a BSS can include various APs. Referring now to FIG. 5, a BSS network 500 includes a plurality of AP and non-AP devices. Particularly, the BSS network 500 includes a first AP 505, second AP 510, and third AP 515. The respective APs 505, 510, 515 can connect via a sideband 520, which may include wired or wireless links. As depicted, the various APs may not be co-located (e.g., may be integral to different devices), or may otherwise contain varying pathloss, such as responsive to beam-forming antennae directions. The sideband 520 can connect the various APs 505, 510, 515 to a controller (not depicted) or the controller may be resident to one or more of the depicted APs 505, 510, 515.

The controller can be integral to the first AP 505, wherein the first AP 505 may be referred to as a master AP 505, controller AP, or the like. In some embodiments, the master AP 505 can be distributed, negotiated, otherwise instantiated in a mesh. For example, the various APs can associate with each other to share a capability, unique identifier, or arbitration token to determine a master AP. The initial association may include an indication of a co-located or non co-located AP. A controller, hardware strapping, register value or other indication can represent a colocation of APs or a relationship therebetween. For example, for each plurality of co-located APs, a local master may be designated or negotiated, and the local masters and other APs may thereafter associate to determine a BSS master. The association may include determining one or more link types. A link type may refer to a performance or configuration of a radio associated with a link. For example, a link type can be a simultaneous transmit-receive link, indicating that the radio can simultaneously transmit and receive (STR); another link type can be a radio which does not simultaneously transmit and receive (NSTR). For example, an NSTR radio can transmit over a single link, or transmit over multiple links. Some link types can be multi-link single radio links wherein the radios are able to transmit and receive over multiple links sequentially. By aligning the various links, such radios may increase an active time of the radio to increase throughput. Multi-link single radios employing such alignments may sometimes be referred to as enhanced multi-link single radios (EMLSR). In some embodiments, the controller may be separate from the depicted APs.

The master AP 505 can exchange information with the other depicted AP 510, 515, or a further AP of the BSS in network communication therewith. The master AP 505 can schedule frequency, time slots, or power associated with transmissions between the various devices of the BSS network 500. For example, the temporal alignments, spatial reuse determinations, power levels limits, and the like can be maintained by the master AP 505, and conveyed to other APs 510, 515 of the BSS network 500 by network communication over the sideband. The master AP 505 can time transmission opportunities on a predefined temporal or spectral slice such as according to a resource unit (RU) of a channel. In some embodiments, the master AP 505 can monitor the packet level spectrum use of a channel (e.g., a wireless channel) to determine transmission opportunities. Such monitoring can include receiving an indication of a state of a channel from another device of the network (e.g., a STA or another AP). For example, the master AP 505 can determine a condition of a channel upon a receipt of a message from another AP comprising an indication of a state of a channel (e.g., indicative of a pathloss of a wireless link such as a power level, an error rate, or the like) as detected by the other AP. The various APs 505, 510, 515 may exchange receive buffer information such as a copy of some or all packets, (e.g., to determine transmission length, duplicate detection, etc.).

An AP, such as the depicted second AP 510 can be in network communication with a plurality of non-simultaneous transmit-receive (NSTR) non-AP, such as the depicted NSTR STA1 525 and NSTR STA2 530. The second AP 510 can connect to the NSTR STA1 525 over a first link 555 and to the NSTR STA2 530 over a second link 560. The second AP 510 can simultaneously transmit to each of the NSTR STA's at a same time. For example, the second AP 510 can receive an indication of an availability of special reuse from the first AP 505, and thereupon simultaneously communicate over the first link 555 and second link 560. In some embodiments, the special reuse can include a plurality of APs. For example, the second link 560 can connect to the master AP 505 or third AP 515 or the third AP can coordinate to a further non-AP (e.g., the simultaneous transmit-receive (STR) STA1) responsive to an indication received from the master AP 505 based on the channel availability. The first link 555 and second link 560 can end respective transmission opportunities (e.g., of a resource unit of other time/frequency slice) responsive to an indication received from the master AP 505.

An AP, such as the depicted first AP 505 can connect to a first enhanced multi-link single radio (EMLSR) non-AP such as the depicted EMSLR STA1 535 over a first link 565 and a EMSLR STA2 540 over a second link 570. The first AP 505 can communicate with the respective EMSLR at different resources of a channel (e.g., different RUs) such as temporally or spectrally different portion of the channel. In some embodiments, the channel portions may temporally overlap (e.g., timesharing) or may include non-contiguous frequency bands (e.g., having spectral padding therebetween). The first AP 505 may determine time slices for the respective channel based on information received from other network devices as a master AP 505, or may receive an indication of an available time slice from another AP acting as a master. In some embodiments, the third link 535 and fourth link 540 can be links to different APs which may spatially reuse portions of a channel based on an indication received from a master AP 505.

The various APs 505, 510, 515 can further reuse temporal or spectral space for simultaneous transmit receive (STR) devices, such as by communicating by the first link 575 and the second link 580 to a first STR STA 545 device and a second STR STA 550 device, respectively. Thus, the network can achieve overall STR throughput for a single device (e.g., an STR device) or across a plurality of devices (e.g., a NSTR or EMLSR device) such that by an aggregation of links, increased throughput and decreased latency can be increased. Moreover, client devices may know the AP is busy based on a detection of one of a plurality of links, such that the client device may await a clear channel prior to transmission. Thus, the increased network aggregate performance may reduce undesired channel contention.

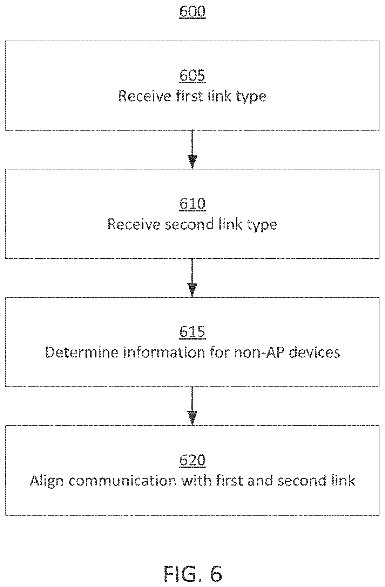

FIG. 6 is an example method 600 of network communication, according to some embodiments. In brief summary, at operation 605, an AP receives a first link type of a first non-AP device. At operation 610, the AP receives a second link type of a second non-AP device. At operation 615, the AP determines information associated with the first non-AP device (e.g., first information) and second information associated with the second non-AP device (e.g., second information). At operation 620, the AP aligns communication with the first and second link. The depicted method is not intended to be limiting. Operations can be added, omitted, or substituted.

Referring again to operation 605, an AP receives a first link type of a first non-AP device. For example, the link type may refer to a capability of a radio or protocol of the non-AP device, min some embodiments. Such a link type can be provided incident to association of the non-AP device (e.g., STA) with the AP. The AP can thereafter store the link type, or convey the link type to further APs, or another controller. At operation 610, the AP receives a second link type of a second non-AP device. The second link type may be a same or different type as the first link type. For example, either of the first or second link type can be an STR link, NSTR link, or MLSR link (e.g., EMLSR).

Referring again to operation 615, the AP determines information associated with the first non-AP device and second information associated with the second non-AP device. For example, the information may be a periodic communication such as a beacon, information which can be conveyed in a data packet, or so forth. The AP device may determine the information based on information received from other network devices (e.g., from a controller or another device in network communication therewith). Referring again to operation 620, the AP aligns communication with the first and second link. Alignment may refer to a communication (e.g., transmission or reception) of information with a relationship therebetween. For example, the communications with the first and second link can temporally align for a beginning or ending of a transmission opportunity, or spectrally align with a same frequency or orthogonal frequency-division multiple access (OFMDA) channel. The access point can align on a same or related RU of a channel. The alignment can depend on the first link type and the second link type. For example, where the first link type and second link type are non-STR links, the AP may communicate simultaneously with the first link and the second link (e.g., may achieve network-scale STR throughput with non-STR devices), according to some embodiments. Where at least one of the first link type and the second link type are STR links, the AP may communicate sequentially with the first link and the second link, according to some embodiments. For example, the communications can comprise a first data packet and second data packet which are aligned to each other.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A device configured to:
detect an energy level of an overlapping basic service set (OBSS) communication;
determine an identity associated with the OBSS communication;
determine a threshold associated with the identity of the OBSS communication;
compare the energy level of the OBSS communication to the threshold; and
transmit a message simultaneous to the OBSS communication on a same link as the OBSS communication, based on the comparison of the threshold to the energy level of the OBSS communication.

2. The device of claim 1, wherein
the identity associated with the OBSS communication is at least one of a color for a BSS;
an identity of an addressee of the OBSS communication; and
an identify of each of a transmitter-receiver pair performing the OBSS communication.

3. The device of claim 1 or 2, wherein
the device is an access point (AP) further configured to schedule a TXOP for an additional network node, separate from the AP, based on the energy level, and convey the TXOP to the additional network node.

4. The device of claim 1 or 2, wherein
the device is configured to operate as a station (STA).

5. The device of claim 1 or 2, wherein
the device is configured to operate as an access point.

6. The device of claim 5, wherein
the device is configured to maintain a lookup table (LUT) for one or more stations of a same BSS.

7. The device of claim 6, wherein the device is configured to:
maintain an additional LUT for an additional access point;
detect a failed transmission to or from at least one of the access point or the additional access point, and
update the LUT or the additional LUT based on the detection of the failed transmission;
wherein in particular the device comprises
a wired connection to convey a portion of the LUT between the device and the additional access point.

8. The device of any one of the preceding claims, wherein
the device is configured to adjust a transmit power for the transmitted message based on the energy level of the OBSS communication.

9. A device comprising:
a first access point (AP) designated as a primary AP, the first AP being configured to:
receive a detected power level from a second AP;
store the detected power level in a lookup table (LUT);
determine a threshold for simultaneous transmission with one or more identified network nodes; and
transmit the LUT or the threshold to a station (STA) device in network communication with the first AP;
the second AP comprising a radio configured to wirelessly communicate with a plurality of STA devices simultaneously.

10. The device of claim 9, wherein
the first AP and the second AP are configured to transmit at a power level based on the threshold.

11. The device of claim any one of the preceding claims 9 to 10, further comprising:
a wired connection between the first AP and the second AP; and
wherein power level information is conveyed over the wired connection.

12. The device of any one of the preceding claims 9 to 11, wherein
the one or more identified network nodes are identified based on
a color of a BSS of the identified network nodes and/or
an identifier of at least one of a transmitter or receiver of a message.

13. The device of any one of the preceding claims 9 to 12, wherein
the first AP is configured to store a pathloss between each device of a BSS of the first AP and a device of a BSS of the second AP in the LUT.

14. A method comprising:
receiving, by a first AP, a first link type of a first non-AP device of a BSS;
receiving, by the first AP, a second link type of a second non-AP device of the BSS;
determining, by the first AP, first information associated with the first non-AP device and second information associated with the second non-AP device; and
aligning communication of the first information with the second information based at least in part on the first link type and the second link type.

15. The method of the preceding claim 14, wherein the alignment comprises:
aligning, by the first AP, a beginning or ending of transmission of a first data packet with the first non-AP device with a beginning or ending of transmission of a second data packet with the second non-AP device;
wherein in particular:
the first link type is non-simultaneous transmit and receive (NSTR), and the second link type is NSTR, and the alignment comprises a simultaneous transmission of the first data packet with the second data packet.
